# EUROPEAN PATENT APPLICATION

(11) **EP 2 736 144 A1**
(43) Date of publication of application: **28.05.2014**
(21) Application number: 12817675.7
(22) Date of filing: 20.07.2012
(51) Int. Cl.: H02J 3/46, H01M 8/00, H01M 8/04, H02J 3/32

(54) **CONTROL DEVICE AND POWER CONTROL METHOD**

(30) Priority: 22.07.2011 JP 2011161239
(71) Applicant: Kyocera Corporation, Kyoto-shi Kyoto 612-8501 (JP)
(72) Inventor: NAKAMURA, Kazutaka, Kyoto 612 8501 (JP)
(74) Representative: Schwabe - Sandmair - Marx
(86) International application number: PCT/JP2012/068515
(87) International publication number: WO 2013/015225

(57) **Abstract**

A control apparatus comprises: a first control unit that controls power generation of a fuel cell to follow power consumption of a load; a second control unit that controls a power supplying device to supply a second power to the load in accordance with an increased amount of the power consumption when the increased amount of the power consumption is equal to or more than an increased amount that can be followed by the fuel cell; and a power detection unit detecting the second power. The first control unit increases the amount of the first power when the second power is detected, to decrease the amount of the second power.

## Description

### Technical Field

The present invention relates to a control apparatus that is provided in a consumer having a load and a fuel cell that generates power to be supplied to the load by using gas, the control apparatus controlling the power supplied to the load, and a power control method.

### Background Art

An increasing number of consumers introduce a power control system provided with a photovoltaic cell (PV) or a storage battery as a distributed power source capable of supplying power to a load. Further, in recent years, the power control system provided with a fuel cell is also actively introduced (for example, see PTL 1).

The fuel cell generates power by a chemical reaction between hydrogen extracted (reformed) from gas such as city gas or propane gas, and oxygen. Further, the fuel cell can also increase or decrease power to be generated, following increase or decrease of power consumption of a load.

Here, since the fuel cell generates power by the chemical reaction as described above, when the power consumption of the load increases rapidly, the power to be generated cannot follow the power consumption in some cases. In such a case, a method employed in the conventional technology is that power supplied from a grid power system is supplied to a load, thereby preventing operation of the load from being stopped.

Meanwhile, recently, there is a case in which an outage of power supplied from the grid power system occurs because of lowered power supplying capability of the grid power system due to occurrence of a large-scale earthquake and the like.

In light of the occurrence of such a power outage, recently, active utilization of power supplied from the fuel cell without depending upon power supplied from the grid power system, is being considered. Specifically, is also considered that execution of 'independent operation" to operate a load by power supplied from the fuel cell when an outage of power supplied from the grid power system occurs.

However, in a case where the "independent operation" is executed by the power supplied from the fuel cell, when power consumption of the load rapidly increases and the power generated by the fuel cell cannot follow the power consumption, it becomes impossible to supply power to the load. There has been a problem that the load should be stopped in such a case.

### Citation List

### Patent Literature

PTL 1: Japanese Patent Application Publication No. 2008-84715

### Summary of the Invention

A control apparatus according to a first feature is provided in a consumer having a load, a fuel cell that generates first power to be supplied to the load by using gas, and a power supplying device capable of supplying second power to the load. The control apparatus controls power supplied to the load. The control apparatus comprises: a first control unit that controls power generation of the fuel cell to follow power consumption of the load; and a second control unit that controls the power supplying device to supply the second power to the load in accordance with an increased amount of the power consumption when the increased amount of the power consumption is equal to or more than an increased amount that can be followed by the fuel cell.

In the first feature, when the second control unit performs control to supply the second power to the load, regarding that the increased amount of the power consumption is equal to or more than the increased amount that can be followed by the fuel cell, the first control unit performs control to increase a power generation amount of the fuel cell, and the second control unit reduces the second power supplied to the load in accordance with the increase of the power generation amount of the fuel cell.

In the first feature, the second control unit controls the power supplying device to supply the load with the second power corresponding to the increased amount of the power consumption when the increased amount of the power consumption is equal to or more than the increased amount that can be followed by the fuel cell during an independent operation in which system power is not supplied to the load.

In the first feature, the power supplying device is a storage battery, and the second control unit controls the storage battery so that power stored in the storage battery does not fall below startup power required by the fuel cell to start power generation.

In the first feature, the control apparatus further comprises a communication unit that detects each of the first power and/or the second power and notifies a system-side management device of the first power and/or the second power when it is possible to cause reverse flow of the first power and/or the second power to a grid power system.

In the first feature, the control apparatus detects each of the first power and/or the second power and calculates a power selling-price corresponding to each reverse-flow power amount even when a power selling-price of each of the first power and/or the second power is different from each other.

A power control method according to a second feature is a method of controlling power supplied to a load in a consumer having the load, a fuel cell that generates first power to be supplied to the load by using gas, and a power supplying device capable of supplying second power to the load. The power control method comprises: a step of controlling power generation by the fuel cell to follow power consumption of the load; and a step of supplying the load with the second power in accordance with an increased amount of the power consumption when the increased amount of the power consumption is equal to or more than an increased amount that can be followed by the fuel cell.

A power control system according to a third feature system includes a fuel cell that generates first power to be supplied to a load by using gas, a power supplying device capable of supplying the load with second power, and a control apparatus. The control apparatus comprises: a first control unit that controls power generation of the fuel cell to follow power consumption of the load; and a second control unit that controls the power supplying device to supply the load with the second power in accordance with an increased amount of the power consumption when the increased amount of the power consumption is equal to or more than an increased amount that can be followed by the fuel cell.

### Brief Description of the Drawings

[Fig. 1]Fig. 1 is a diagram showing the entire configuration of a power control system according to the first embodiment.
[Fig. 2]Fig. 2 is a block diagram showing the configuration of the multi PCS according to the first embodiment.
[Fig. 3]Fig. 3 is a sequence diagram showing operation of the multi PCS during independent operation according to the first embodiment.
[Fig. 4]Fig. 4 is a diagram showing the entire configuration of a power control system according to the other embodiment.
[Fig. 5]Fig. 5 is a diagram showing the entire configuration of a power control system according to the other embodiment.

### Description of the Embodiment

With reference to the drawings, the embodiment of the present invention will be described. In the drawings of the following embodiment, the same or similar reference signs are applied to the same or similar portions.

### [First Embodiment]

### (1) Configuration of power control system

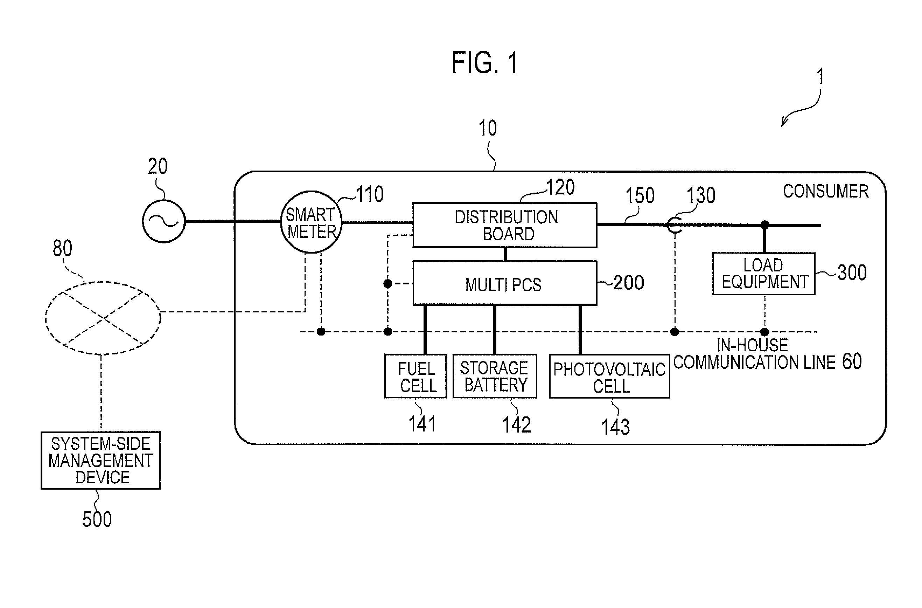

Fig. 1 is a diagram showing the entire configuration of a power control system 1 according to the first embodiment. In the following figures, power lines are shown by thick lines, and control signal lines are shown by broken lines. Note that, a control signal line may not just be wired but wireless.

As shown in Fig. 1, the power control system 1 according to the present embodiment is provided in a consumer 10 such as a general household supplied with AC power from a grid power system 20 of an electric power company, and is capable of performing power control of the equipment in the consumer 10.

As shown in Fig. 1, the power control system 1 includes a smart meter 110, a distribution board 120, a fuel cell 141, a storage battery 142, a photovoltaic cell 143, a multi PCS 200, and a load 300. It is noted that the power control system 1 may include a storage battery installed in an electric vehicle and the like.

The smart meter 110 is capable of measuring a total power consumption that is a sum of power consumed by the load in the power control system 1. The smart meter 110 is capable of notifying a system-side management device 500 of the measured total power consumption via a wide area communication network 80. It is noted that a device called a CEMS (Community Energy Management System) managed by an electric power utility is assumed to be the system-side management device 500. Further, the wide area communication network 80 may be a leased line network or the Internet.

Further, the smart meter 110 is also capable of measuring reverse-flow power subjected to reverse flow from the power control system 1 to the grid power system 20, and notifying the system-side management device 500 of the reverse-flow power. Further, the smart meter 110 is also capable of transmitting a control signal indicating that a power outage is detected, to the multi PCS 200 when detecting the power outage.

The distribution board 120 distributes power according to the control of the multi PCS 200. When AC power that the multi PCS 200 outputs is less than power consumption consumed by the load 300, the distribution board 120 receives a shortfall of the AC power from the grid power system 20, and supplies the load 300 with the AC power that the multi PCS 200 outputs and the AC power received from the grid power system 20. Also, when the AC power that the multi PCS 200 outputs exceeds the power consumption of the load 300, the distribution board 120 causes reverse flow of an excess of the AC power to the grid power system 20.

Note that, an operation state that supplies the load 300 with both powers of the power from the multi PCS 200 and the power from the grid power system 20 is referred to as an "interconnected operation", and an operation state that supplies the load 300 with only the power from the multi PCS 200 is referred to as an "independent operation". When the outage of power supplied from the grid power system 20 occurs (hereinafter merely referred to as a "power outage"), the distribution board 120 performs parallel-off from the grid power system 20, and shifts from the interconnected operation to the independent operation.

It is noted that, for switching from the interconnected operation to the independent operation, there is a method in which the distribution board 120 switches a supply destination of power to a separately provided power line for the independent operation and there is a method in which the distribution board 120 performs parallel-off from the grid power system 20 and uses an in-house power distribution line 150 as a supply destination of power. Description will be given below mainly for a case where the distribution board 120 performs parallel-off from the grid power system 20 and uses the in-house power distribution line 150 as a supply destination of power.

During the independent operation, to the load 300, fuel-cell power, photovoltaic-cell power, and storage-battery discharge power are supplied via the multi PCS 200 and the distribution board 120.

A power sensor 130 periodically measures a power value of power consumption consumed by the load 300 and notifies the multi PCS 200 of the measured power value. It is noted that the power sensor 130 may notify the multi PCS 200 of a current value of power consumption consumed by the load 300.

The fuel cell 141 is a household fuel cell which generates power to be supplied to a load by using gas such as city gas or propane gas that is input via a gas line. The fuel cell 141 outputs DC power acquired by the power generation (hereinafter, fuel-cell power) to the multi PCS 200 via a power line provided between the multi PCS 200 and the fuel cell 141.

The storage battery 142 stores the power, and outputs DC power acquired by power discharge (hereinafter, storage-battery discharge power) to the multi PCS 200 and is charged with the DC power from the multi PCS 200, via a power line provided between the multi PCS 200 and the storage battery 142. Also, via a control signal line provided between the multi PCS 200 and the storage battery 142, the storage battery 142 outputs information indicative of the stored power to the multi PCS 200, and a control signal for charging and discharging is input to the storage battery 142. In the present embodiment, the storage battery 142 constitutes a power supplying device capable of supplying storage-battery discharge power (second power) to the load.

The photovoltaic cell 143 receives sunlight to generate power and outputs DC power acquired by the power generation (hereinafter, the photovoltaic-cell power) to the multi PCS 200 via a power line provided between the multi PCS 200 and the photovoltaic cell 143. Note that, the photovoltaic cell 143 is configured by one panel or a plurality of panels. Also, the photovoltaic cell 143 may be configured by using a plurality of strings configured by the plurality of panels. It is noted that, in the present embodiment, the photovoltaic cell 143 may be a power supplying device capable of supplying photovoltaic-cell power (second power) to the load.

The multi PCS 200 inputs and receives AC power to and from the distribution board 120, via a power line provided between the distribution board 120 and the multi PCS 200. Specifically, the multi PCS 200 has a function of converting DC power supplied from the fuel cell 141, the storage battery 142, and the photovoltaic cell 143 into AC power to be output, and a function of converting AC power from the grid power system 20 into DC power to be output. Such a multi PCS 200 is referred to as a hybrid PCS in some cases. The AC power that is output from the multi PCS 200 is transmitted to the in-house power distribution line 150 via the distribution board 120, and used in the load 300 appropriately or becomes reverse-flow power to the grid power system 20.

It is noted that, in the present embodiment, DC power supplied from the fuel cell 141 and AC power converted from the DC power are described as fuel-cell power appropriately. Similarly, DC power discharged from the storage battery 142 and AC power converted from the DC power are described as storage-battery discharge power appropriately, and DC power supplied from the photovoltaic cell 143 and AC power converted from the DC power are described as photovoltaic-cell power appropriately.

Further, in the present embodiment, fuel-cell power supplied from the fuel cell 141 (first power) and storage-battery discharge power supplied from the storage battery 142 (second power) are supplied to the load via the in-house power distribution line 150 which is a common power line. With such a configuration, power which is a mixture of the fuel-cell power and the storage-battery discharge power is supplied to the load 300. It is noted that, in the present embodiment, the multi PCS 200 constitutes a control apparatus that controls power supplied to the load 300.

For example, a heat accumulator and the like in addition to household electrical appliances such as lighting, an air conditioner, a refrigerator, and a television are assumed as the load 300. The AC power is supplied to the load 300 via the in-house power distribution line 150 provided between the distribution board 120 and the load 300, and the load 300 operates by consuming the supplied AC power. There may be one or more loads 300.

### (2) Configuration of multi PCS

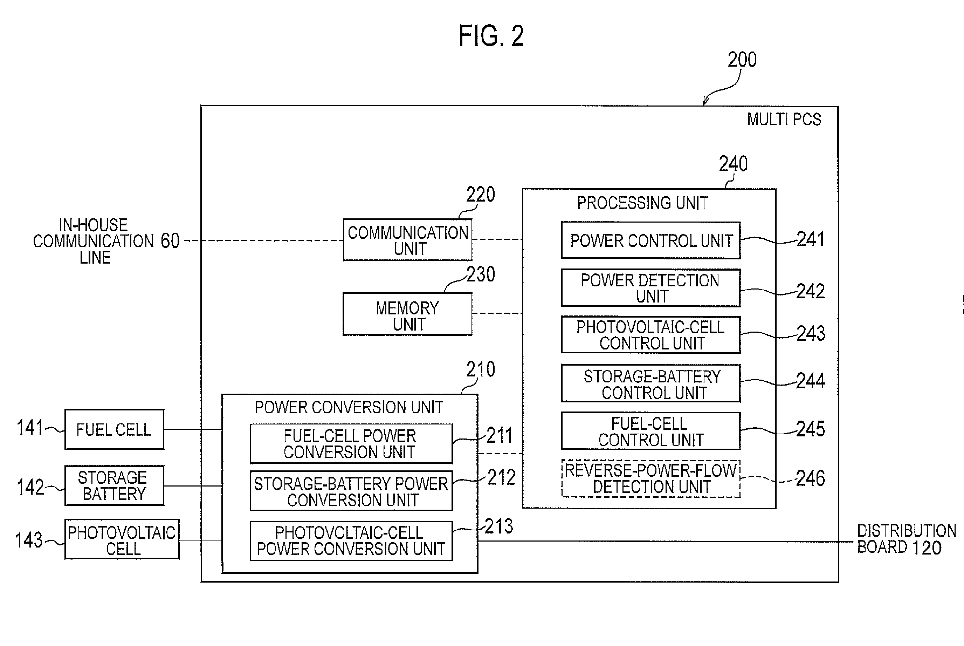

The configuration of the multi PCS 200 is described with reference to Fig. 2. Fig. 2 is a block diagram showing the configuration of the multi PCS 200. As shown in Fig. 2, the multi PCS 200 includes a power conversion unit 210, a communication unit 220, a memory unit 230, and a processing unit 240.

The power conversion unit 210 inputs and receives AC power to and from the distribution board 120, via a power line provided between the distribution board 120 and the power conversion unit 210. The power conversion unit 210 converts DC power supplied from the fuel cell 141, the storage battery 142, and the photovoltaic cell 143 into AC power to output the AC power to the distribution board 120. It is noted that the power conversion unit 210 operates in accordance with control of the processing unit 240. Specifically, the power conversion unit 210 is provided with a fuel-cell power conversion unit 211, a storage-battery power conversion unit 212, and a photovoltaic-cell power conversion unit 213.

The fuel-cell power conversion unit 211 converts fuel-cell power (DC power) generated by the fuel cell 141 into AC power to be output to the distribution board 120. The fuel-cell power conversion unit 211 is capable of controlling a supplied amount of gas such as city gas or propane gas that is input via a gas line to control a power amount of the fuel-cell power generated by the fuel cell 141. The fuel-cell power conversion unit 211 is also capable of detecting a power value of the fuel-cell power generated by the fuel cell 141 and notifying the processing unit 240 of the power value.

The storage-battery power conversion unit 212 converts the storage-battery discharge power (DC power) supplied from the storage battery 142 into AC power to be output to the distribution board 120. The storage-battery power conversion unit 212 outputs, to the storage battery 142, DC power for storing (charging) the storage battery 142, via a power line provided between the storage battery 142 and the storage-battery power conversion unit 212. The storage-battery power conversion unit 212 is also capable of outputting, to the storage battery 142, the fuel-cell power generated by the fuel cell 141 or the photovoltaic-cell power generated by the photovoltaic cell 143, as DC power for storing (charging) the storage battery 142. The storage-battery power conversion unit 212 is also capable of detecting a power value of the storage-battery discharge power supplied from the storage battery 142 to be notified to the processing unit 240. The storage-battery power conversion unit 212 is also capable of detecting a power amount (amount of power stored) stored in the storage battery 142 and notifying the processing unit 240 of the power amount.

The photovoltaic-cell power conversion unit 213 converts the photovoltaic-cell power (DC power) generated by the photovoltaic cell 143 into AC power to be output to the distribution board 120. The photovoltaic-cell power conversion unit 213 is also capable of detecting a power value of the photovoltaic-cell power generated by the photovoltaic cell 143 and notifying the processing unit 240 of the power value.

The communication unit 220 is connected to an in-house communication line 60. The communication unit 220 communicates with each of devices such as the smart meter 110 and the power sensor 130 via the in-house communication line 60. The communication unit 220 is also capable of communicating with the system-side management device 500 via the smart meter 110.

The memory unit 230 memorizes a program executed by the processing unit 240, and is used as a work area during execution of the program in the processing unit 240.

The processing unit 240 is to control various types of functions of the multi PCS 200, and is configured by using a CPU and a memory. The processing unit 240 is capable of controlling power supplied to the load 300. The processing unit 240 is provided with a power control unit 241, a power detection unit 242, a photovoltaic-cell control unit 243, a storage-battery control unit 244, and a fuel-cell control unit 245.

The power control unit 241 controls switching between an interconnected operation and an independent operation. Specifically, when receiving notification indicating that an outage of power supplied from the grid power system 20 occurs from the smart meter 110, the power control unit 241 instructs the distribution board 120 to switch to the independent operation. Further, the power control unit 241 notifies the photovoltaic-cell control unit 243, the storage-battery control unit 244, and the fuel-cell control unit 245 of switching to the independent operation. Alternatively, when the multi PCS 200 is provided with a power outage detection unit and the power outage detection unit detects a power outage, switching to automatic operation described above may be performed.

The power detection unit 242 detects the storage-battery discharge power supplied from the storage battery 142 to the load. Specifically, a power value of the storage-battery discharge power notified by the storage-battery power conversion unit 212 is acquired such that the storage-battery discharge power supplied from the storage battery 142 to the load is detected.

The photovoltaic-cell control unit 243 controls the photovoltaic cell 143 and the photovoltaic-cell power conversion unit 213. For example, the photovoltaic-cell control unit 243 is capable of instructing the photovoltaic-cell power conversion unit 213 to output the photovoltaic-cell power to the storage battery 142 when the photovoltaic-cell power is in excess.

The storage-battery control unit 244 controls the storage battery 142 and the storage-battery power conversion unit 212. When an increased amount of power consumption consumed by the load is equal to or more than an increased amount of the fuel-cell power that can be followed by the fuel cell 141, the storage-battery control unit 244 controls the storage battery 142 to supply the load with the storage-battery discharge power corresponding to the increased amount of the power consumption.

Specifically, when the independent operation is executed and when an increased amount of power consumption of the load 300 is equal to or more than an increased amount of the fuel-cell power that can be followed by the fuel cell 141, the storage-battery control unit 244 controls the storage battery 142 to supply the load 300 with the storage-battery discharge power corresponding to the increase of the power consumption.

More particularly, when receiving notification indicating that the independent operation is executed from the power control unit 241, the storage-battery control unit 244 instructs the storage-battery power conversion unit 212 to discharge power stored in the storage battery 142. It is noted that, in the present embodiment, the storage-battery control unit 244 constitutes a second control unit.

The fuel-cell control unit 245 controls the fuel cell 141 and the fuel-cell power conversion unit 211. The fuel-cell control unit 245 controls the fuel cell 141 to supply the load with the fuel-cell power following the increase of power consumption consumed by the load 300.

Specifically, the fuel-cell control unit 245 periodically acquires power consumption of the load from the power sensor 130 via the communication unit 220. The fuel-cell control unit 245 instructs the fuel-cell power conversion unit 211 to increase or decrease the fuel-cell power generated by the fuel cell 141 in accordance with the increase or decrease of the acquired power consumption. It is noted that, the fuel-cell control unit 245 follows the increase or decrease of power consumption to control the fuel-cell power conversion unit 211 in any operation state of the interconnected operation and the independent operation.

Further, when the storage-battery discharge power is detected by the power detection unit 242, the fuel-cell control unit 245 increases the fuel-cell power supplied from the fuel cell 141 so as to reduce the storage-battery discharge power.

Specifically, when the independent operation is executed, the fuel-cell control unit 245 acquires the storage-battery discharge power detected by the power detection unit 242.

Further, the fuel-cell control unit 245 memorizes, in advance, a threshold value of an increased or decreased amount of the fuel-cell power that can be generated by the fuel cell 141, that is, a threshold value of an increased amount of the fuel-cell power that can follow the power consumption. Alternatively, the above-described threshold value is calculated from state information (such as temperature of a power generation module) of the fuel cell 141. When the increased amount of power consumption of the load 300 is more than the threshold value of the increased amount of the fuel-cell power that can be followed, the fuel-cell control unit 245 acquires the storage-battery discharge power detected by the power detection unit 242. The fuel-cell control unit 245 instructs the fuel-cell power conversion unit 211 to increase the fuel-cell power generated by the fuel cell 141 by the acquired storage-battery discharge power. Further, the fuel-cell power conversion unit 211 that receives this instruction controls the fuel cell 141 to increase the fuel-cell power.

Here, since the fuel-cell power and the storage-battery discharge power are supplied to the load via the in-house power distribution line 150 which is a common power line, the fuel-cell power is increased as described above, thereby making possible to reduce the storage-battery discharge power. It is noted that, in the present embodiment, the fuel-cell control unit 245 constitutes a first control unit.

### (3) Operation of multi PCS

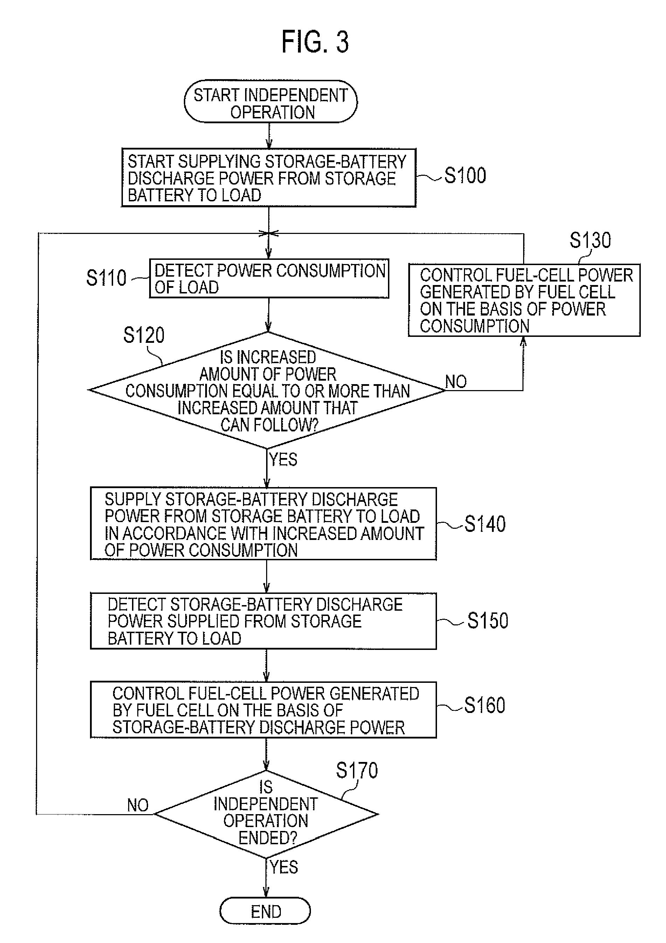

Next, the operation of the multi PCS 200 will be described. Fig. 3 is a sequence diagram showing operation of the multi PCS 200. Here, Fig. 3 shows operation when a power outage of the grid power system 20 occurs and the multi PCS 200 is executing the independent operation in the power control system 1. It is noted that, the operation shown below is not limited to the case where the independent operation is executed.

In step S100, in the multi PCS 200, when the independent operation is started, the storage-battery control unit 244 instructs the storage-battery power conversion unit 212 to discharge power stored in the storage battery 142. The storage-battery power conversion unit 212 receiving this instruction starts supplying the storage discharge power from the storage battery 142 to the load.

In step S110, the power detection unit 242 periodically detects power consumption of the load from the power sensor 130.

In step S120, the fuel-cell control unit 245 determines whether or not the increased amount of power consumption is larger than the increased amount of the fuel-cell power that can be followed by power generation by the fuel cell 141. Specifically, the fuel-cell control unit 245 determines whether or not the increased amount of power consumption of the load 300 is larger than the threshold value of the increased amount of the fuel-cell power that can follow.

In step S130, when determining that the increased amount of power consumption is not larger than the increased amount of the fuel-cell power that can follow, regarding the increased amount of power consumption as being within a range of capability of the fuel cell 141 to follow the load, the fuel-cell control unit 245 instructs the fuel-cell power conversion unit 211 to increase a power generation amount in the fuel cell 141, that is, to increase the fuel-cell power to be generated.

In step S140, the storage battery 142 supplies the load 300 with the storage-battery discharge power corresponding to the increased amount of power consumption.

That is, in the multi PCS 200, the storage discharge power is supplied from the storage battery 142 to the load 300 from step S100 to step S140, thereby making it possible to continue to supply the load 300 with power even when the increased amount of power consumption is larger than the increased amount of the fuel-cell power that can be followed by the fuel cell 141.

In step S150, the power detection unit 242 detects a power value of the storage-battery discharge power. Specifically, the power detection unit 242 acquires the power value of the storage-battery discharge power from the storage-battery power conversion unit 212. The power detection unit 242 notifies the fuel-cell control unit 245 of the power value of the storage-battery discharge power.

In step S160, the fuel-cell control unit 245 instructs the fuel-cell power conversion unit 211 to increase the fuel-cell power generated by the fuel cell 141 by the acquired storage-battery discharge power. The fuel-cell power conversion unit 211 increases the fuel-cell power generated by the fuel cell 141 according to this instruction. Further, the storage-battery control unit 244 instructs the fuel-cell power conversion unit 211 to decrease the storage-battery discharge power by the increased fuel-cell power. The storage-battery power conversion unit 211 decreases power discharged by the storage battery 142 according to this instruction.

Further, in step S170, the power control unit 241 determines whether the independent operation is ended, ends operation when the independent operation is ended, and the process returns to step S110 when the independent operation is not ended.

It is noted that, in the above-described operation from steps S100 to S160, the multi PCS 200 detects the power value of the storage-battery discharge power and performs control to increase the fuel-cell power generated by the fuel cell 141 by the storage-battery discharge power, however, may detect the power value of the photovoltaic-cell power and perform control to increase the fuel-cell power generated by the fuel cell 141 by the photovoltaic-cell power.

### (4) Operation and effect

In the power control system 1 according to the present embodiment, in the multi PCS 200, when the independent operation is executed and in a case where the increased amount of the fuel-cell power generated by the fuel cell 141 cannot follow the increased amount of the power consumption of the load 300, the storage-battery discharge power supplied from the storage battery 142 is supplied to the load 300.

In this way, in the multi PCS 200, even when the fuel-cell power generated by the fuel cell 141 cannot follow the increase of the power consumption of the load 300, it is possible to continue to supply the load 300 with power.

Further, for example, when an outage of power supplied from the grid power system 20 occurs and the independent operation is executed, power stored in the storage battery 142 is preferably retained as much as possible. In the power control system 1 according to the present embodiment, in the multi PCS 200, the fuel-cell power generated by the fuel cell 141 is increased so as to reduce the storage-battery discharge power supplied from the storage battery 142 to the load 300. That is, the multi PCS 200 can retain power stored in the storage battery 142 as much as possible by actively using the fuel-cell power generated by the fuel cell 141.

### [First Modification]

Next, a first modification according to the first embodiment will be described.

In the above-described embodiment, in the multi PCS 200, when the independent operation is executed, the storage-battery discharge power is detected, and the fuel-cell power generated by the fuel cell 141 is increased so as to reduce the storage-battery discharge power.

In the multi PCS 200 according to the present modification, when the interconnected operation is performed, the fuel-cell power generated by the fuel cell 141 is increased so as to reduce system power supplied from the grid power system 20. Specifically, in the multi PCS 200, when the system power is supplied from the grid power system 20 to the load 300, the power detection unit 242 detects a power value of the system power. It is noted that the power detection unit 242 may detect the power value of the system power.

Further, when the power value of the system power is detected, the fuel-cell control unit 245 increases the fuel-cell power by control to follow the load to reduce the system power. Specifically, the fuel-cell control unit 245 instructs the fuel-cell power conversion unit 211 to increase the fuel-cell power generated by the fuel cell 141 by the acquired system power.

With the multi PCS 200 according to the present modification, it is possible to suppress utilization of the system power supplied from the grid power system 20 and utilize the fuel-cell power generated by the fuel cell 141 as much as possible.

Such a multi PCS 200 is beneficial when, for example, a power rate of the fuel-cell power generated by the fuel cell 141 is lower than a power rate of the system power supplied from the grid power system 20. Further, the multi PCS 200 is beneficial also in terms of environmental protection such as reduction of carbon dioxide because of actively utilizing the fuel-cell power generated by the fuel cell 141, compared to a case where the system power of the grid power system 20 generated by thermal power generation and the like is utilized.

### [Second Modification]

Next, a second modification according to the first embodiment will be described. Here, generally, the fuel cell 141 requires startup power for starting up an ignition heater or auxiliary machines (various types of pumps). Specifically, the fuel cell 141 can be started up when AC power is input via a power line provided between the multi PCS 200 and the fuel cell 141 and the input AC power reaches the startup power.

In the multi PCS 200 according to the present modification, the storage-battery control unit 244 controls the storage battery 142 so that power stored in the storage battery 142 does not fall below the startup power required by the fuel cell 141 to start power generation.

Specifically, the storage-battery control unit 244 periodically acquires the value of power stored in the storage battery 142 (the value of power stored) from the storage-battery power conversion unit 212. Further, the storage-battery control unit 244 memorizes, in advance, a startup power value required by the fuel cell 141 to start power generation, and instructs the storage-battery power conversion unit 212 so that the value of power stored in the storage battery 142 does not fall below the startup power value. The storage-battery power conversion unit 212 receiving this instruction controls output of the storage-battery discharge power so that the value of power stored in the storage battery 142 does not fall below the startup power value.

With the multi PCS 200 according to the present modification, it is possible to always store the startup power of the fuel cell 141 in the storage battery 142, thus making it possible to start up the fuel cell 141 even when the outage of system power supplied from the grid power system 20 suddenly occurs.

### [Second Embodiment]

Next, a second embodiment will be described. Here, recently, lowered power supplying capability of the grid power system 20 due to occurrence of a large-scale earthquake and the like, is a problem, and it is also being considered that lowering of power supplying capability is prevented by reverse flow of not only the photovoltaic-cell power generated by the photovoltaic cell 143 but also the fuel-cell power generated by the fuel cell 141 and the storage-battery discharge power supplied from the storage battery 142 to the grid power system 20.

Further, when causing the photovoltaic-cell power, the fuel-cell power, and the storage-battery discharge power to flow reversely to the grid power system 20, a power selling-price of each of the photovoltaic-cell power, the fuel-cell power, and the storage-battery discharge power is assumed to be different from each other.

Further, in order to calculate a total power selling-price of reverse-flow power that is sold, a function of detecting a reverse-flow power amount of each of the photovoltaic-cell power, the fuel-cell power, and the storage-battery discharge power to be notified to the system-side management device 500 managed by an electric power utility, is required.

On the basis of such a point, in the multi PCS 200 according to the present embodiment, the processing unit 240 is provided with a reverse-power-flow detection unit 246 that detects, when it is possible to cause the photovoltaic-cell power, the fuel-cell power, and the storage-battery discharge power to flow reversely to the grid power system 20, a reverse-flow power amount of each of the photovoltaic-cell power, the fuel-cell power, and the storage-battery discharge power.

The reverse-power-flow detection unit 246 detects fuel-cell reverse-flow power subjected to reverse flow from the fuel cell 141 to the grid power system 20 (first reverse-flow power) and storage-battery reverse-flow power subjected to reverse flow from the storage battery 142 to the grid power system 20 (second reverse-flow power). Further, the reverse-power-flow detection unit 246 is also capable of detecting the photovoltaic-cell reverse-flow power subjected to reverse flow from the photovoltaic cell 143 to the grid power system 20 (second reverse-flow power).

Specifically, the reverse-power-flow detection unit 246 acquires a power amount of the photovoltaic-cell power, a power amount of the fuel-cell power, and a power amount of the storage-battery discharge power from each of the fuel-cell power conversion unit 211, the storage-battery power conversion unit 212, and the photovoltaic-cell power conversion unit 213. Further, the reverse-power-flow detection unit 246 acquires a total reverse-flow power amount from the smart meter 110.

The reverse-power-flow detection unit 246 calculates a photovoltaic-cell reverse-flow power amount, a fuel-cell reverse-flow power amount, and a storage-battery reverse-flow power amount on the basis of a ratio of each of a power amount of the photovoltaic-cell power, a power amount of the fuel-cell power, and a power amount of the storage-battery discharge power, and the total reverse-flow power amount.

Description will be given by exemplifying a case where the power amount of the photovoltaic-cell power is "500 kW", the power amount of the fuel-cell power is "200 kW", the power amount of the storage-battery discharge power is "300 kw", and the total reverse-flow power amount is "500 kW", for example. In such a case, the reverse-power-flow detection unit 246 calculates the photovoltaic-cell reverse-flow power amount as "250 kW", the fuel-cell reverse-flow power amount as "100 kW", and the storage-battery reverse-flow power amount as "150 kW".

In the embodiment, the reverse-power-flow detection unit 246 may detect at least one power amount of the power amount of the photovoltaic-cell power, the power amount of the fuel-cell power, and the power amount of the storage-battery discharge power. The reverse-power-flow detection unit 246 may be configured so as to detect at least one power amount of the power amount of the photovoltaic-cell power, the power amount of the fuel-cell power, and the power amount of the storage-battery discharge power. The reverse-power-flow detection unit 246 may be configured so as to calculate at least one reverse-flow power amount of the photovoltaic-cell reverse-flow power amount, the fuel-cell reverse-flow power amount, and the storage-battery reverse-flow power amount on the basis of the detected power amount.

Further, the communication unit 220 notifies the system-side management device 500 that manages power supplied from the grid power system 20 to a group of consumers including the consumer 10, of the photovoltaic-cell reverse-flow power, the fuel-cell reverse-flow power, and the storage-battery reverse-flow power. Specifically, the communication unit 220 notifies the system-side management device 500 of the photovoltaic-cell reverse-flow power amount, the fuel-cell reverse-flow power amount, and the storage-battery reverse-flow power amount calculated by the reverse-power-flow detection unit 246 via the smart meter 110. It is noted that, in the present embodiment, the communication unit 220 constitutes a notification unit that notifies the system-side management device 500 of the reverse-flow power amount.

In the multi PCS 200 according to the present embodiment, when it is possible to cause the photovoltaic-cell power, the fuel-cell power, and the storage-battery discharge power to reversely flow to the grid power system 20, it is possible to detect each of the photovoltaic-cell reverse-flow power amount, the fuel-cell reverse-flow power amount, and the storage-battery reverse-flow power amount to be notified to the system-side management device 500.

Therefore, in the multi PCS 200, even when a power selling-price of each of the photovoltaic-cell reverse-flow power, the fuel-cell reverse-flow power, and the storage-battery reverse-flow power is different from each other, it becomes possible to calculate a power selling-price corresponding to each reverse-flow power amount.

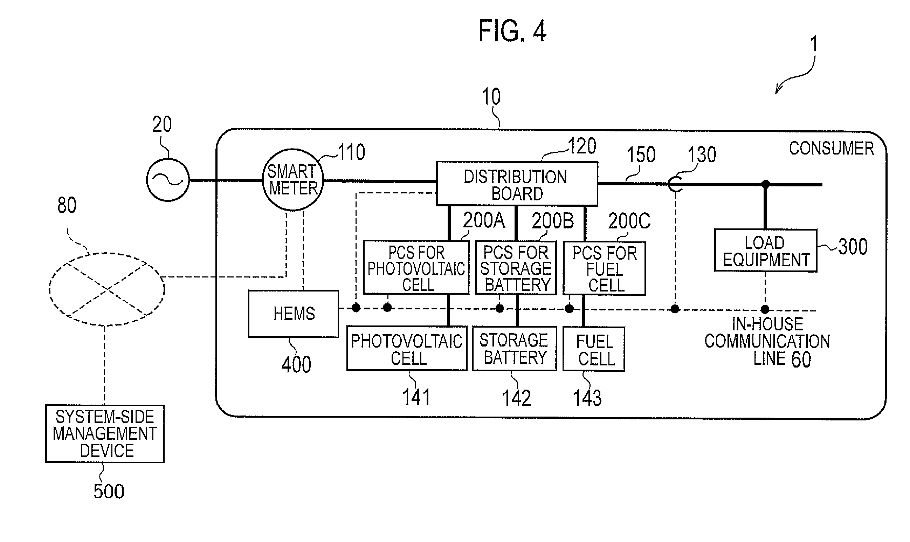

Here, Fig. 4 shows an example of a case where the power control system 1 is provided with a HEMS (Home Energy Management System) 400 that controls power in the consumer 10 and provided with a PCS 200A for a photovoltaic cell, a PCS 200B for a storage battery, and a PCS 200C for a fuel cell in place of the multi PCS 200.

As shown in Fig. 4, when the power control system 1 is provided with the HEMS 400, the HEMS 400 may have a function of the reverse-power-flow detection unit 246 and a function of the communication unit 220 described above.

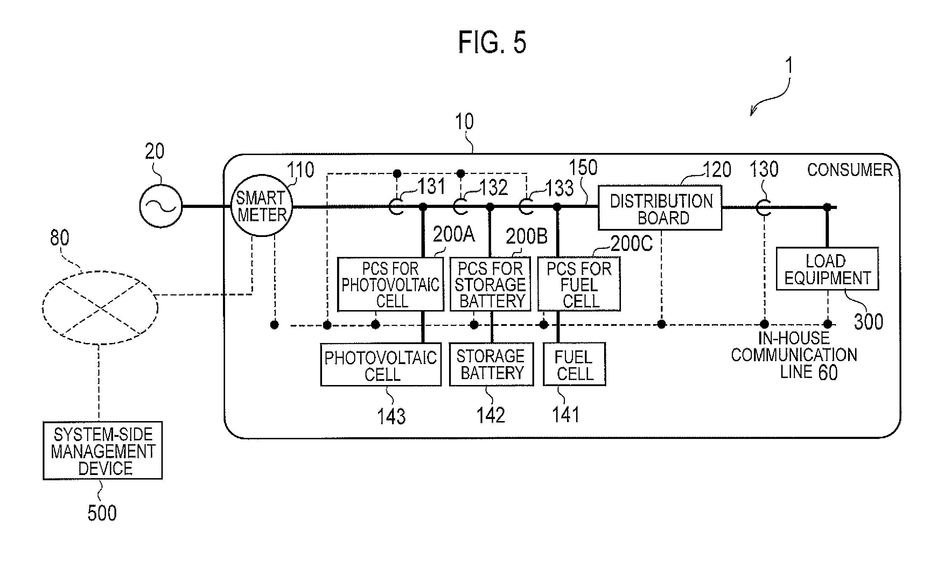

Further, Fig. 5 shows an example of a case where the smart meter 110 of the power control system 1 has the function of the reverse-power-flow detection unit 246 and the function of the communication unit 220 described above.

The example of Fig. 5 shows an example of a case where the power control system 1 is provided with the PCS 200A for the photovoltaic cell, the PCS 200B for the storage battery, and the PCS 200C for the fuel cell in place of the multi PCS 200, and each of the PCS 200A for the photovoltaic cell, the PCS 200B for the storage battery, and the PCS 200C for the fuel cell is connected to the in-house power distribution line 150 not via the distribution board 120.

Further, in the example of Fig. 5, power sensors 131 to 133 are disposed on the in-house power distribution line 150. Specifically, the power sensor 131 is disposed between a connection point of the in-house power distribution line 150 of the PCS 200A for the photovoltaic cell and the grid power system 20. The power sensor 132 is disposed between the connection point of the in-house power distribution line 150 of the PCS 200A for the photovoltaic cell and a connection point of the in-house power distribution line 150 of the PCS 200B for the storage battery. The power sensor 133 is disposed between the connection point of the in-house power distribution line 150 of the PCS 200B for the storage battery and a connection point of the in-house power distribution line 150 of the PCS 200C for the fuel cell.

The power sensor 131 detects a total value (A + B + C (kw)) of the photovoltaic-cell reverse-flow power amount (for example, A (kw)), the storage-battery reverse-flow power amount (for example, B (kw)), and the fuel-cell reverse-flow power amount (for example, C (kw)). The power sensor 132 detects a total value (B + C (kw)) of the storage-battery reverse-flow power amount (for example, B (kw)), and the fuel-cell reverse-flow power amount (for example, C (kw)). The power sensor 133 detects the fuel-cell reverse-flow power amount (for example, C (kw)).

In such a case, the smart meter 110 calculates the photovoltaic-cell reverse-flow power amount (for example, A (kw)), the storage-battery reverse-flow power amount (for example, B (kw)), and the fuel-cell reverse-flow power amount (for example, C (kw)), and notifies the system-side management device 500 of the calculation result on the basis of difference between respective detection results by the power sensors 131 to 133.

### [Other Embodiments]

As described above, the present invention has been described according to the embodiments. It must not be understood that, however, the discussions and the drawings constituting a part of this disclosure limit present invention. From this disclosure, various alternative embodiments, examples and operational techniques are apparent to those skilled in the art.

For example, in the above-described embodiment, the storage battery 142 is described as a power supplying device. However, the photovoltaic cell 143 may be the power supplying device. In this case, the multi PCS 200 increases fuel-cell power so as to reduce photovoltaic-cell power. With such a multi PCS 200, it is possible to actively supply the load with stable power from the fuel cell 141 when fluctuation of the photovoltaic-cell power generated by the photovoltaic cell 143 is large due to influence of weather and the like.

Further, in the above-described embodiments, respective functions of the processing unit 240, the communication unit 220, and the memory unit 230 of the multi PCS 200 may be configured as the HEMS 400 independent of the PCS, or provided in various devices in the smart grid technology, such as the smart meter 110 or a BEMS (Building Energy Management System).

In addition, the above-described embodiments and modifications may be combined with one another. As mentioned above, it must be understood that the present invention includes various embodiments and the like that are not described herein. Accordingly, the present invention shall be limited by the matters defining the invention of the claims that are appropriate from this disclosure.

Note that the entire content of the Japanese Patent Application No. 2011-161239 (filed on July 22, 2011) is incorporated herein by reference.

### Industrial Applicability

According to the present invention, a control apparatus and power control method, with which, even when the fuel-cell power generated by the fuel cell cannot follow the increase of the power consumption of the load, it is possible to continue to supply the load 300 with power.

## Claims

1. A control apparatus that is provided in a consumer having a load, a fuel cell that generates first power to be supplied to the load by using gas, and a power supplying device capable of supplying second power to the load, the control apparatus controlling power supplied to the load, comprising:
a first control unit that controls power generation of the fuel cell to follow power consumption of the load; and
a second control unit that controls the power supplying device to supply the second power to the load in accordance with an increased amount of the power consumption when the increased amount of the power consumption is equal to or more than an increased amount that can be followed by the fuel cell.

2. A control apparatus, wherein,
when the second control unit performs control to supply the second power to the load, regarding that the increased amount of the power consumption is equal to or more than the increased amount that can be followed by the fuel cell,
the first control unit performs control to increase a power generation amount of the fuel cell, and
the second control unit reduces the second power supplied to the load in accordance with the increase of the power generation amount of the fuel cell.

3. The control apparatus according to claim 1, wherein
the second control unit controls the power supplying device to supply the load with the second power corresponding to the increased amount of the power consumption when the increased amount of the power consumption is equal to or more than the increased amount that can be followed by the fuel cell during an independent operation in which system power is not supplied to the load.

4. The control apparatus according to claim 1, wherein
the power supplying device is a storage battery, and
the second control unit controls the storage battery so that power stored in the storage battery does not fall below startup power required by the fuel cell to start power generation.

5. The control apparatus according to any one of claims 1 to 4, further comprising:
a communication unit that detects each of the first power and/or the second power and notifies a system-side management device of the first power and/or the second power when it is possible to cause reverse flow of the first power and/or the second power to a grid power system.

6. The control apparatus according to any one of claim 5,
detecting each of the first power and/or the second power and calculating a power selling-price corresponding to each reverse-flow power amount even when a power selling-price of each of the first power and/or the second power is different from each other.

7. A power control method of controlling power supplied to a load in a consumer having the load, a fuel cell that generates first power to be supplied to the load by using gas, and a power supplying device capable of supplying second power to the load, comprising:
a step of controlling power generation by the fuel cell to follow power consumption of the load; and
a step of supplying the load with the second power in accordance with an increased amount of the power consumption when the increased amount of the power consumption is equal to or more than an increased amount that can be followed by the fuel cell.

8. A power control system including a fuel cell that generates first power to be supplied to a load by using gas, a power supplying device capable of supplying the load with second power, and a control apparatus, wherein
the control apparatus comprises:
a first control unit that controls power generation of the fuel cell to follow power consumption of the load; and
a second control unit that controls the power supplying device to supply the load with the second power in accordance with an increased amount of the power consumption when the increased amount of the power consumption is equal to or more than an increased amount that can be followed by the fuel cell.

## Amended claims

### Amended claims under Art. 19.1 PCT

**.** laim 1] A control apparatus that is provided in a consumer having a load, a fuel cell that generates first power to be supplied to the load by using gas, and a power supplying device capable of supplying second power to the load, the control apparatus controlling power supplied to the load, comprising:
a first control unit that controls power generation of the fuel cell to follow power consumption of the load; and
a second control unit that controls the power supplying device to supply the second power to the load in accordance with an increased amount of the power consumption when the increased amount of the power consumption is equal to or more than an increased amount that can be followed by the fuel cell.

**.** laim 2] (Amended) A control apparatus according to claim 1, wherein,
when the second control unit performs control to supply the second power to the load, regarding that the increased amount of the power consumption is equal to or more than the increased amount that can be followed by the fuel cell,
the first control unit performs control to increase a power generation amount of the fuel cell, and
the second control unit reduces the second power supplied to the load in accordance with the increase of the power generation amount of the fuel cell.

**.** laim 3] The control apparatus according to claim 1, wherein
the second control unit controls the power supplying device to supply the load with the second power corresponding to the increased amount of the power consumption when the increased amount of the power consumption is equal to or more than the increased amount that can be followed by the fuel cell during an independent operation in which system power is not supplied to the load.

**.** laim 4] The control apparatus according to claim 1, wherein
the power supplying device is a storage battery, and
the second control unit controls the storage battery so that power stored in the storage battery does not fall below startup power required by the fuel cell to start power generation.

**.** laim 5] The control apparatus according to any one of claims 1 to 4, further comprising:
a communication unit that detects each of the first power and/or the second power and notifies a system-side management device of the first power and/or the second power when it is possible to cause reverse flow of the first power and/or the second power to a grid power system.

**.** laim 6] (Amended) The control apparatus according to claim 5, detecting each of the first power and/or the second power and calculating a power selling-price corresponding to each reverse-flow power amount even when a power selling-price of each of the first power and/or the second power is different from each other.

**.** laim 7] A power control method of controlling power supplied to a load in a consumer having the load, a fuel cell that generates first power to be supplied to the load by using gas, and a power supplying device capable of supplying second power to the load, comprising:
a step of controlling power generation by the fuel cell to follow power consumption of the load; and
a step of supplying the load with the second power in accordance with an increased amount of the power consumption when the increased amount of the power consumption is equal to or more than an increased amount that can be followed by the fuel cell.

**.** laim 8] A power control system including a fuel cell that generates first power to be supplied to a load by using gas, a power supplying device capable of supplying the load with second power, and a control apparatus, wherein
the control apparatus comprises:
a first control unit that controls power generation of the fuel cell to follow power consumption of the load; and
a second control unit that controls the power supplying device to supply the load with the second power in accordance with an increased amount of the power consumption when the increased amount of the power consumption is equal to or more than an increased amount that can be followed by the fuel cell.
